# FASCICULE DE BREVET EUROPEEN

(11) **EP 0 374 058 B1**
(45) Date de publication et mention de la délivrance du brevet: **27.01.1993**
(21) Numéro de dépôt: 89420468.4
(22) Date de dépôt: 28.11.1989
(51) Int. Cl.: B01F 13/02, B01F 15/00

(54) **Appareil pour le traitement avec un gaz de balayage d'un matériau thermoplastique particulaire**
Apparat zum Behandeln eines thermoplastischen teilchenförmigen Materials mit einem Mischgas
Device for treating thermoplastic particulate material with an agitation gas

(30) Priorité: 09.12.1988 FR 8816510
(43) Date de publication de la demande: 20.06.1990
(73) Titulaire: Bouheben, Guy, F-69500 Bron (FR); Bouheben, Christophe, F-69500 Bron (FR); Bouheben, épouse Giambrone, Carole, F-69380 Lissieu-Lozanne (FR)
(72) Inventeur: Bouheben, Guy, F-69500 Bron (FR)
(74) Mandataire: Laurent, Michel

(56) Documents cités:
- EP-A- 0 075 049
- BE-A- 877 078
- DE-A- 2 942 325
- DE-A- 3 341 830
- DE-B- 1 027 966
- FR-A- 411 738
- FR-A- 1 241 006
- FR-A- 1 594 468
- FR-A- 2 317 069
- GB-A- 1 091 584
- GB-A- 1 247 354

## Description

La présente invention concerne le traitement avec un gaz de balayage d'un matériau thermo-plastique particulaire.

Par "matériau thermo-plastique", on entend un polymère ou copolymère organique, solide à la température ambiante, pouvant être rendu relativement fluide par chauffage à une température supérieure à la température ambiante. A titre de matériau thermo-plastique pouvant être retenu selon l'invention, on peut citer les polystyrènes, les polyéthylènes, les polypropylènes, les résines dites ABS.

Par "matériau thermo-plastique particulaire", on entend un matériau thermo-plastique à l'état divisé, se présentant sous la forme de particules, par exemple des grains, granulés, ou perles, ayant toutes formes particulières, par exemple sphérique, cubique, etc... Une poudre d'un matériau thermo-plastique, ou un matériau thermoplastique pulvérulent, répondant notamment à cette définition.

La présente invention est maintenant décrite, définie et discutée, par référence à la mise en oeuvre du procédé de coloration par enrobage selon la demande de brevet FR-A- 2 317 069 ; le contenu de cette dernière est intégré à la présente description, en tant que de besoin. Mais il doit être entendu qu'un appareil selon l'invention peut recevoir bien d'autres applications que la coloration par enrobage, comme indiqué ci-après.

Selon la demande de brevet précitée, on a décrit un procédé de coloration par enrobage, consistant de manière générale à :
- agiter une charge du matériau thermo-plastique particulaire ;
- mélanger à cette charge une matière liquide de coloration comprenant un solvant inerte, un colorant en suspension ou solution dans ledit solvant, et un liant dissous dans ledit solvant ;
- évaporer le solvant par circulation d'un courant gazeux de balayage dans la charge, pendant ou après l'agitation de cette dernière ;

moyennant quoi on obtient des particules du matériau thermo-plastique, enrobées par un revêtement superficiel du liant, dans lequel le colorant est dispersé de manière uniforme.

Pour la mise en oeuvre du procédé précité, un appareil approprié a été décrit et proposé dans la demande de brevet FR-A-2 317 069. Cet appareil comprenait :
A) un réceptacle fixe pour la réception d'une charge du matériau thermo-plastique particulaire, dont la paroi latérale a une forme de révolution, par exemple cylindrique, par rapport à un axe vertical ; ce réceptacle est équipé d'un moyen d'introduction de la charge à colorer, à savoir un couvercle articulé, d'un moyen d'évacuation de la charge colorée, par exemple une goulotte située au bas du réceptacle, et d'un moyen de circulation du courant gazeux de balayage dans le réceptacle ; ce dernier moyen comprend, d'une part un moyen d'introduction d'air (ou d'un autre gaz) au sein du rotor d'agitation décrit ci-après, et d'autre part un moyen d'évacuation par aspiration du courant gazeux introduit, disposé sur le couvercle.
B) un rotor d'agitation de la charge, mobile en rotation par rapport au réceptacle et autour de l'axe vertical, et disposé pour l'essentiel à l'intérieur dudit réceptacle ; ce rotor comporte :
   - un arbre axial creux pour l'introduction de l'air de balayage, et pourvu d'un moyen d'entrainement en rotation ; cet arbre creux traverse le fond du réceptacle, et le moyen d'entrainement en rotation est situé à l'extérieur de ce dernier ;
   - trois pales creuses d'écoulement centripète ascendant, dont l'intérieur communique avec celui de l'arbre axial ; chaque pale comprend d'une part un bras radial s'étendant radialement et horizontalement depuis l'arbre axial, dans la partie inférieure du réceptacle, et d'autre part un montant vertical, s'étendant axialement et verticalement à l'intérieur du réceptacle ; chaque pale est pourvue d'une part d'une face avant, à savoir respectivement une face inclinée vers l'avant pour le bras radial, et une face oblique vers le centre du réceptacle pour le montant vertical, et d'autre part une face arrière perforée pour l'insufflation de l'air de balayage.

L'exploitation d'un appareil tel que décrit précédemment, pour la mise en oeuvre du procédé de coloration défini ci-dessus, a révélé les inconvénients principaux suivants.

Il apparait difficile de maintenir la charge en cours de coloration, constamment à l'écart des parois du réceptacle, qu'il s'agisse du fond ou de la paroi latérale de ce dernier. En conséquence, une quantité non négligeable de l'extrait sec de la matière liquide de coloration, à savoir colorant et liant, vient revêtir les parois du réceptacle de traitement, au détriment de la coloration effective des particules du matériau thermo-plastique. Entre deux traitements de coloration, ceci conduit à un temps d'immobilisation important, consacré au nettoyage complet du réceptacle, lequel se révèle d'ailleurs difficile et pénible. Ceci amène aussi à un enrobage aléatoire des particules du matériau thermoplastique, et en tout cas inférieur en quantité de colorant déposé à la valeur attendue pour une coloration complète de la charge.

En conséquence du déplacement des particules colorées ou en cours de coloration sur la face avant des pales du rotor d'agitation, on constate également un dépôt du colorant et du liant sur le rotor. Ce dépôt conduit aux mêmes conséquences que celles énoncées précédemment.

En définitive, pour toutes ces raisons, on aboutit à une coloration des particules non maîtrisée, et donc aléatoire d'une charge à une autre. Au surplus, un tel appareil conduit à une exploitation industrielle difficile, à raison du nettoyage important exigé entre deux traitements de coloration. Ce nettoyage ne permet pas une exploitation économique optimum, eu égard aux temps importants d'immobilisation requis.

La présente invention a pour objet un appareil tel que défini précédemment, permettant, lorsqu'il est utilisé pour une coloration par enrobage, un dépôt quasi-complet du colorant introduit dans le réceptacle, sur les particules de la charge du matériau thermoplastique traité.

Tout d'abord, selon l'invention, les pales d'écoulement présentent chacune un bord de prélèvement des particules du matériau thermo-plastique, ou bord d'attaque, situé au moins pour partie, voir en totalité, à une certaine distance de la surface interne en vis-à-vis. Cette distance sera fonction de la dimension des particules unitaires. Une distance comprise entre 5 et 15 mm convient pour la plupart des produits existants.

Pendant l'introduction de la matière liquide de coloration, et sa distribution au sein de la charge particulaire traitée, cette caractéristique permet de créer une barrière temporaire entre le rotor d'agitation et la surface interne en vis-à-vis, notamment la paroi latérale du réceptacle, cette barrière étant matérialisée par au moins deux épaisseurs laminaires des particules traitées en déplacement. En conséquence de l'éloignement relatif du rotor de la surface en vis-à-vis, la barrière temporaire obtenue permet d'isoler la charge en cours de coloration, des parois du réceptacle de traitement, au moins pendant la phase de coloration.

Ces parois sont ainsi protégées de toute coloration parasite.

Ensuite, toujours selon l'invention, la face avant d'au moins une pale d'écoulement, à savoir du bras radial et/ou du montant vertical, comporte une pluralité de cavités superficielles, adjacentes les unes des autres, pour la rétention temporaire des particules transportées de la charge, pendant le traitement de cette dernière.

Selon l'invention, on a en effet découvert que l'immobilisation relative des particules traitées, par rapport à la face avant du rotor d'agitation, diminuait dans des proportions importantes le dépôt sur ce dernier de l'extrait sec de la matière liquide de coloration.

Pour terminer, toujours selon l'invention, le réceptacle de traitement comporte une cloison inférieure d'extension radiale, perméable au courant gazeux de balayage, assurant une ventilation de la charge traitée. Cette cloison sépare le réceptacle en deux compartiments, à savoir un compartiment principal et supérieur de traitement, et un compartiment inférieur d'introduction du courant gazeux de balayage.

Selon cette caractéristique, et par différence avec l'appareil selon la demande de brevet FR-A-2 317 069, d'une part le courant gazeux de balayage est introduit en totalité par le fond du réceptacle ou cuve, et vers le haut, et d'autre part le rotor d'agitation, même s'il peut demeurer creux, ne sert pas à l'introduction de tout ou partie du même courant gazeux.

Cette disposition particulière de ventilation autorise la régulation en température du courant gazeux de balayage, et son alimentation par une turbine, ce qui ne pouvait être fait avec la disposition selon la demande de brevet FR-A-2 317 069.

La présente invention est maintenant décrite par référence aux dessins annexés, dans lesquels :
- la figure 1 représente une vue schématique, en coupe axiale, d'un appareil de traitement conforme à l'invention ;
- la figure 2 représente, toujours de manière schématique, une vue de dessus de l'appareil représenté à la figure 1 ;
- la figure 3 représente une vue partielle de la face avant d'une pale appartenant au rotor de l'appareil représenté aux figures 1 et 2, dont la surface alvéolaire est terminée.

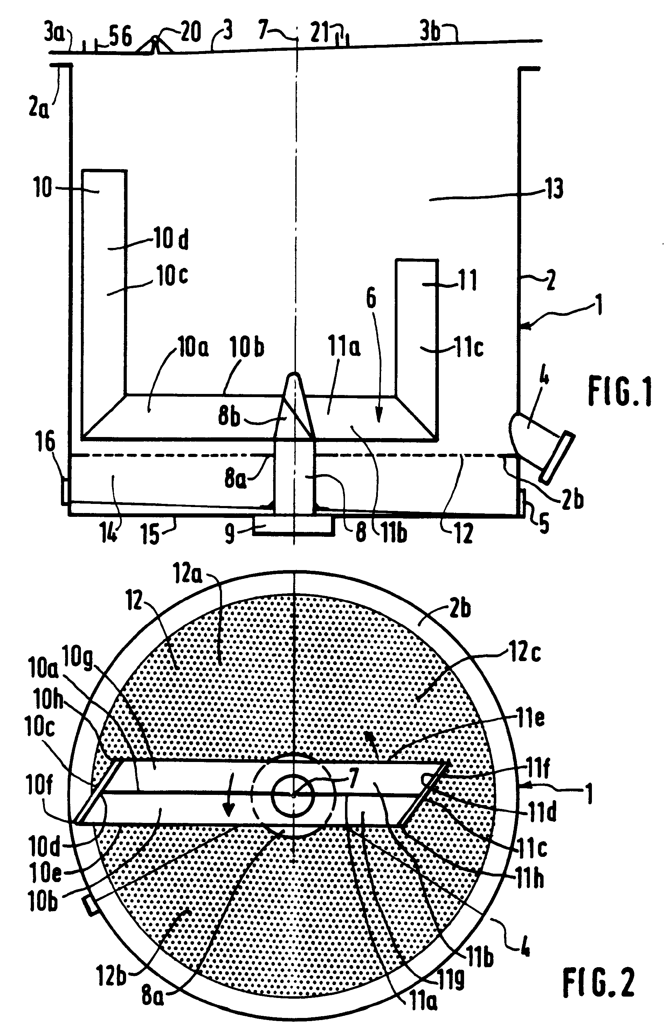

L'appareil représenté aux figures 1 à 3 permet le traitement d'une charge d'un matériau thermo-plastique particulaire, et plus précisément pour la coloration par enrobage des particules du matériau précité ; étant entendu que le même appareil peut servir à d'autres fins que cette coloration, comme décrit ci-après. Par ailleurs, dans le mode de réalisation décrit ci-après, l'appareil comporte deux pales, mais il est évident que cela n'est pas limitatif et que l'on pourrait également réaliser des appareils conformes à l'invention comportant un nombre supérieur de pales.

De manière générale, un appareil selon l'invention comporte :
- un réceptacle fixe (1), ayant la forme d'une cuve cylindrique, pour la réception d'une charge du matériau particulaire ;
- un rotor (6) d'agitation de la charge, disposé pour l'essentiel à l'intérieur du réceptacle (1), mobile en rotation par rapport à ce dernier et autour de l'axe vertical (7) du réceptacle.

Le réceptacle (1) est équipé d'un moyen ou couvercle (3) d'introduction de la charge à traiter, reposant sur le rebord annulaire (2a) de la cuve ou réceptacle (2). Ce couvercle comporte une partie fixe (3a), et une partie mobile (3b) articulée à la partie fixe par une charnière (20). Le couvercle (3) comporte par ailleurs un orifice (56) d'évacuation du courant gazeux de balayage, par l'action d'une turbine d'aspiration non représentée, ainsi qu'un orifice (21) d'introduction d'une matière liquide de coloration, consistant comme décrit précédemment en un mélange d'un solvant, d'un colorant, et d'un agent liant soluble.

Le réceptacle (1) comporte une cloison inférieure (12), d'extension radiale, perforée, consistant en trois secteurs perforés (12a, 12b, 12c), reposant chacun, du côté extérieur sur un épaulement circulaire et intérieur (2b), appartenant à la paroi cylindrique (2), et du côté intérieur sur un épaulement circulaire (8a), solidaire de l'arbre axial (8), dont il sera question ci-après.

Cette cloison (12) sépare le réceptacle (1) en deux compartiments, à savoir un compartiment principal (13) et supérieur, pour le traitement de la charge particulaire, et un compartiment inférieur (14) d'introduction du courant gazeux de balayage. Ce dernier est introduit dans le compartiment inférieur par un orifice (5) prévu au bas de la paroi cylindrique (2). Comme décrit ci-après, le courant gazeux de balayage introduit dans le compartiment (14) passe au travers de la cloison (12) perméable, et assure une ventilation vers le haut de la charge traitée, disponible dans le compartiment supérieur (13).

Le rotor (6) d'agitation comporte :
- un arbre axial (8), traversant de part en part le compartiment (14) d'introduction du courant gazeux, et plus précisément le fond (15) du réceptacle (1), dont il sera question ci-après, et la cloison perforée (12) ;
- un agitateur proprement dit, comprenant deux pales (10) et (11) d'écoulement centripète ascendant, construites de manière monobloc, et comprises substantiellement dans le même plan diamètral.

Plus précisément, l'agitateur (10, 11), est amovible par rapport à l'arbre axial (8), ce dernier comportant une partie conique (8b), située à l'intérieur du compartiment principal (13), munie d'un système de solidarisation auto-bloquant sous l'effet de la rotation du rotor (6). A l'extérieur du réceptacle (2), l'arbre axial (8) est pourvu d'un moyen (9), telle qu'une poulie, pour son entrainement en rotation par un moyen moteur approprié.

De manière générale, chaque pale (10) ou (11) comprend, d'une part un bras radial (10a) ou (11a), s'étendant radialement et horizontalement depuis l'arbre (8) vers la paroi (2), dans la partie inférieure de la cuve (1), et d'autre part un montant vertical (10c) ou (11c), s'étendant verticalement à l'intérieur du réceptacle (2), depuis un bras radial correspondant (10a) ou (11a) vers le couvercle (3). Le montant vertical (10c) de la première pale (10) a une hauteur sensiblement égale aux deux tiers de la hauteur du compartiment (13) de traitement, tandis que le montant vertical (11c) de la deuxième pale (11) a une hauteur sensiblement égale aux deux tiers de la hauteur du montant vertical (10c) de la première pale. Le bras radial (11a) de la deuxième pale (11) a une longueur sensiblement égale aux deux tiers du rayon du compartiment (13) de traitement, ou réceptacle.

Chaque bras radial (10a) ou (11a) comporte, d'une part une face avant (10b) ou (11b) (selon le sens de rotation), inclinée vers l'avant, et d'autre part une face arrière (10g) ou (11g) inclinée en sens inverse. Chaque face avant (10b) ou (11b) s'étend donc en hauteur, d'un bord inférieur (10e) ou (11e) de prélèvement des particules de la charge traitée, à un bord de fuite non référencé. Préférentiellement, le bord inférieur (10e) ou (11e) des bras radiaux, situé dans un même plan transversal, est situé à une distance de la cloison inférieure (12) préférentiellement égale à 15 mm.

Chaque montant vertical (10c) ou (11c) comprend une face avant (10d) ou (11d) (selon le sens de rotation), dirigée en oblique vers le centre de la cuve (1). Chaque face avant (10d) ou (11d) s'étend donc d'un bord extérieur (10f) ou (11f) de prélèvement, vers un bord intérieur de dégagement (10h) ou (11h). Préférentiellement, le bord extérieur (10f) appartenant au montant vertical (10c) de la première pale (10) d'écoulement est situé a une distance de la paroi latérale (2) du réceptacle (1), égale dans le cas présent à 10 mm, mais qui en général, pourrait varier entre 5 et 15 mm en fonction de la taille des particules.

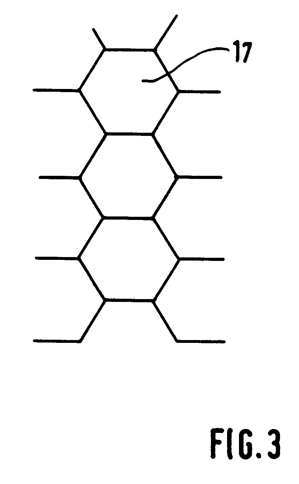

Selon la figure 3, la face avant (10d) ou (11d) du montant vertical (10c) ou (11c) de la pale (10) ou (11) comporte une pluralité de cavités superficielles (17) adjacentes les unes aux autres, ayant la forme d'une surface alvéolaire du type nid d'abeille. Ces cavités superficielles (17) sont obtenues par usinage, en perforant plusieurs séries alignées et parallèles de trous borgnes ayant le même diamètre, par exemple avec un même foret. Ces séries sont emboîtées les unes dans les autres, grâce au décalage ayant la valeur d'un rayon d'une série par rapport à celle immédiatement voisine. Puis les trous borgnes ainsi obtenus sont repris chacun avec un foret de diamètre plus large, de manière à obtenir un profil extérieur hexagonal conforme à la figure 3. Comme expliqué ci-après, cette surface alvéolaire ainsi obtenue permet une rétention temporaire des particules transportées de la charge traitée, pendant le traitement de cette dernière.

On décrit ci-après un exemple de mise en oeuvre d'un appareil conforme aux figures 1 à 3, permettant une coloration par enrobage de granulés en résine ABS.

On remplit le réceptacle ou cuve (1) avec une charge du matériau thermo-plastique particulaire à colorer, représentant 35 % environ de la capacité utile du compartiment supérieur (13) de traitement, cette capacité étant exprimée en kilogrammes. Par exemple, le compartiment supérieur (13) reçoit une charge de 500 kilogrammes. La partie mobile (3b) du couvercle (3) est refermée, le rotor d'agitation (6) mis en rotation est réglé à une vitesse lente, de l'ordre de 10 tours par minute. Une turbine soufflante est raccordée à l'orifice (5) d'introduction d'air, au bas du compartiment inférieur (14). L'air débité passe au travers de la paroi perforée (12), et ventile la masse de granulés présente dans le compartiment (13), agitée par le rotor (6). Une turbine aspirante est raccordée à la sortie d'évacuation (56), ce qui permet de mettre l'intérieur de la cuve (2) en dépression, et entraine une extraction forcée du courant gazeux de balayage. La matière liquide de coloration est introduite dans le réceptacle (2), par l'orifice d'introduction (21), selon un séquencement réglé par un programmateur. Ce séquencement peut être le suivant, par exemple :
- de 3 à 5 secondes : injection de la matière liquide de coloration ;
- de 30 à 40 secondes : répartition de la matière colorante, évaporation, et fixation de l'extrait sec ;
- de 3 à 5 secondes : nouvelle injection de la matière liquide de coloration ;
- de 30 à 40 secondes : évaporation et fixation de l'extrait sec ;
- etc...
- de 3 à 5 minutes : évaporation finale avec un courant d'air chaud à 70° C ;
- ouverture de la goulotte d'évacuation (4).

Un tel cycle de coloration peut durer en moyenne 20 minutes, et représenter une production de l'ordre de 1 500 kilogrammes par heure, pour un appareil ayant un diamètre de l'ordre de 1,4 mètres.

A la fin de l'opération décrite précédemment, a savoir du cycle de coloration, toutes les parties internes de l'appareil demeurent propres, et en particulier la face interne de la paroi (2), et les pales (10) et (11) du rotor d'agitation (6). On note seulement une légère coloration de ces parties internes, qu'il est aisé de nettoyer dans un temps très court.

Avec un appareil tel que décrit précédemment, il est donc aisé de changer à la fois de matériau traité et de matière colorante.

Entre deux traitements différents, tels que changement de matière à traiter ou de coloration à réaliser, l'appareil décrit précédemment subit dans un temps très court, et avec facilité, la préparation suivante :
- grâce au fond incliné (15), les fines générées ou non par l'attrition du matériau particulaire traité précédemment et ayant traversé la cloison perforée (12), sont soufflées par le courant d'air introduit par l'orifice (5), et récupérées par l'orifice ou trappe (16) ;
- l'agitateur monobloc constitué par les pales (10) et (11) est retiré de l'arbre central (8), et nettoyé avec un solvant aliphatique ;
- la surface intérieure de la paroi (2), ainsi que la paroi perforée (12) sont nettoyées avec un papier d'essuyage mouillé par un solvant.

Une telle phase de préparation n'immobilise l'appareil que pendant un temps limité, par exemple de l'ordre de 20 minutes.

Compte tenu de la quasi-absence de pollution obtenue selon l'invention, il est possible d'utiliser la quasi-intégralité de la matière colorante introduite dans l'appareil pour enrober le matériau particulaire traité. On obtient donc des rendements en matière colorante proches de 100 %.

On précise ci-après divers avantages spécifiques, résultant des caractéristiques techniques suivantes.

La cloison perforée (12), sous la forme de trois segments perforés amovibles (12a, 12b, 12c), permet une inspection et un entretien soigneux et rapide de l'appareil.

L'inclinaison des faces avant (10b) et (11b) des bras du rotor, ainsi que l'inclinaison des faces avant (10d) et (11d) des montants verticaux du rotor, de l'ordre de 30 à 40°, permettent de manière optimum un mouvement centripète et ascendant de la charge traitée.

Le dimensionnement relatif et particulier des pales (10) et (11d) décrit précédemment, consistant d'une part à raccourcir le bras radial (11a), et d'autre part à raccourcir le montant vertical (11c) par rapport au montant vertical (10c), permet de déstabiliser et dissocier la masse traitée, lorsque cette dernière s'agglomère sous la forme d'un bloc, ce qui est par exemple le cas pour des granulés cubiques.

La vitesse de rotation du rotor (6), choisie relativement lente, comprise entre 8 et 20 tours/min provoque peu de dépression au sein de la masse traitée, sous la forme par exemple de vortex.

Selon une variante de l'appareil conforme à l'invention, il peut être envisagé de modifier le système d'entraînement de l'arbre axial (8) tel que décrit précédemment en utilisant une motorisation externe installée sur une potence. Dans une telle variante, le rotor (6) d'agitation est descendu à l'intérieur du réceptacle (1) par l'intermédiaire d'un arbre axial de commande relié à cette motorisation. Par rapport à la solution précédemment décrite, cette variante permet de relever facilement le rotor, notamment lorsque l'on souhaite procéder à son entretien puisque l'on a alors un accès rapide et direct à l'intérieur de la paroi (2) ainsi qu'à la cloison perforée (12). Cette solution évite par ailleurs de traverser le fond (15) du réceptacle (1) et de la cloison perforée (12), et simplifie donc la construction de l'ensemble de l'appareil. La remise en place et le positionnement du rotor se fait de manière simple et précise.

L'appareil décrit précédemment peut être utilisé pour tout autre traitement qu'une coloration par enrobage, par exemple le séchage d'un matériau plastique particulaire, la régénération d'un matériau plastique particulaire coloré par enrobage.

On décrit ci-après l'utilisation du même appareil pour une régénération par exemple.

Pour une telle application, par l'orifice (21), on introduit ou pulvérise un solvant approprié. L'orifice (56) quant à lui sert à l'introduction d'air ou d'azote. L'orifice (16) sert quant à lui à la récupération du solvant.

Une opération de régénération peut être alors accomplie de la manière suivante :
a) - pendant la phase de nettoyage, le solvant est introduit et pulvérisé par l'orifice (21) et un courant d'azote est introduit par l'orifice (56) ; après mouillage préalable, les particules sont brassées par l'agitateur (6) ; le solvant chargé de pigments est récupéré par l'orifice (5) ;
b) - par une pulvérisation poursuivie et continue du solvant, on rince la charge traitée ;
c) - par l'admission d'air chaud par l'orifice (56), en liaison avec l'aspiration par une turbine branchée sur l'orifice (16), on sèche la matière particulaire, et on récupère le solvant résiduel.

## Revendications

1. Appareil pour le traitement avec un gaz de balayage, d'un matériau thermo-plastique particulaire, comprenant :
A) un réceptacle fixe (1) pour la réception d'une charge d'un matériau, dont la paroi latérale (2) a une forme de révolution par rapport à un axe (7), équipé d'un moyen (3) d'introduction de la charge à traiter, d'un moyen (4) d'évacuation de charge traitée, et d'un moyen (5, 56) de circulation d'un gaz de balayage dans le réceptacle.
B) un rotor (6) d'agitation de la charge, mobile en rotation par rapport au réceptacle et autour dudit axe, disposé pour l'essentiel à l'intérieur dudit réceptacle, comportant :
- un arbre axial (8) pourvu d'un moyen (9) d'entrainement en rotation ;
- au moins deux pales (10, 11) d'écoulement centripète ascendant, chaque pale comprenant, d'une part un bras radial (10a,11a) s'étendant radialement et horizontalement depuis ledit arbre, dans la partie inférieure du réceptacle, pourvu d'une face avant (10b, 11b) (selon le sens de rotation) inclinée vers l'avant, et d'autre part un montant vertical (10C, 11c), s'étendant verticalement à l'intérieur du réceptacle, pourvu d'une face avant (10d, 11d) (selon le sens de rotation) oblique vers le centre,
**caractérisé** en ce que :
- les pales d'écoulement (10, 11) présentent chacune un bord de prélèvement (10e, 11e, 10f) des particules du matériau thermo-plastique, situé au moins pour partie à une certaine distance de la surface interne (12,1) en vis-à-vis ;
- le réceptacle comporte une cloison (12) inférieure d'extension radiale, perméable au courant gazeux de balayage, assurant une ventilation de la charge traitée, ladite cloison séparant le réceptacle en deux compartiments, à savoir un compartiment principal (13) et supérieur de traitement, et un compartiment inférieur (14) d'introduction du courant gazeux ;
- la face avant (10b,10d,11b,11c) d'au moins une pale (10,11) d'écoulement, à savoir du bras radial (10a,11a) et/ou du montant vertical (10c,11c), comporte une pluralité de cavités superficielles (17) adjacentes les unes aux autres, pour la rétention temporaire des particules transportées de la charge pendant le traitement de cette dernière.

2. Appareil selon la revendication 1, caractérisé en ce que le bord inférieur (10e, 11e) de prélèvement des particules du matériau thermo-plastique, appartenant au bras radial (10a, 11a) d'au moins une pale d'écoulement (10, 11), est situé à une distance de la cloison inférieure (12), comprise entre 5 et 15 mm.

3. Appareil selon la revendication 1, caractérisé en ce que le bord extérieur (10f) de prélèvement des particules du matériau thermo-plastique, appartenant au montant vertical (10c) d'au moins une pale (10) d'écoulement, est situé à une distance de la paroi latérale (2) du réceptacle, comprise entre 5 et 15 mm.

4. Appareil selon la revendication 1, caractérisé en ce que l'arbre axial (8) traverse de part en part le compartiment (14) d'introduction du courant gazeux.

5. Appareil selon la revendication 1, caractérisé en ce que l'arbre axial (8) du rotor d'agitation (6) est commandé par une motorisation externe installée sur une potence et est situé à l'intérieur du compartiment (13) supérieur du réceptacle fixe (1).

6. Appareil selon la revendication 1, caractérisé en ce que les deux pales (10,11) d'écoulement centripète ascendant sont construites à la manière d'un agitateur monobloc, et comprises substantiellement dans le même plan diamétral, les bras radiaux (10a,11a) des deux pales respectivement étant substantiellement alignés.

7. Appareil selon la revendication 6, caractérisé en ce que l'agitateur (10,11) est amovible par rapport à l'arbre axial (8) d'entraînement.

8. Appareil selon la revendication 1, caractérisé en ce que le réceptacle comporte un fond (15) incliné par rapport à la cloison inférieure (14), et une trappe (16) latérale d'accès au compartiment d'introduction (14) du courant gazeux, située à la partie basse du fond incliné.

9. Appareil selon la revendication 1, caractérisé en ce que le montant vertical (10c) d'une première pale (10) a une hauteur sensiblement égale aux deux tiers de la hauteur du compartiment (13) de traitement, et le montant vertical (11c) d'une deuxième pale (11) a une hauteur sensiblement égale aux deux tiers de la hauteur du montant vertical (10c) de la première pale (10).

10. Appareil selon la revendication 1, caractérisé en ce que le bras radial (11a) d'une pale (11) a une longueur sensiblement égale aux deux tiers du rayon du réceptacle (1).

11. Appareil selon l'une des revendications 1 à 10, caractérisé en ce que la face avant présente une surface alvéolaire du type nid d'abeilles.

## Patentansprüche

1. Vorrichtung zum Behandeln eines thermoplastischen teilchenförmigen Materials mit einem Spülgas mit:
A) einem festen Behälter (1) zur Aufnahme einer Ladung eines Materials, dessen seidiche Wand (2) die Gestalt eines Drehkörpers in Bezug auf eine Achse (7) hat, und der mit einem Mittel (3) zur Einführung der zur behandelnden Beladung, mit einem Mittel (4) zur Entnahme der behandelten Beladung und mit einem Mittel (5, 56) zum Umlauf eines Spülgases in dem Behälter ausgestaltet ist,
B) einem Rotor (6) zur Durchmischung der Beladung, der für eine Drehung in Bezug auf den Behälter und um die besagte Achse beweglich und der im wesentlichen im Innern des Behälters angeordnet ist, mit:
- einer axialen Welle (8), die mit einem Mittel (9) zum Drehantrieb versehen ist;
- mindestens zwei Blattschaufeln (10, 11) für einen aufsteigenden zentripetalen Ablauf, wobei jede Blattschaufel einerseits einen radialen Arm (10a, 11a) im unteren Bereich des Behälters, der sich radial und horizontal von der besagten Welle weg erstreckt und der über eine nach vorne geneigte vordere Seite (10b, 11b) (im Sinne der Drehbewegung) verfügt, und andererseits einen vertikalen Arm (10c, 11c) aufweist, der sich vertikal im Innern des Behälters erstreckt und der über eine schräg zur Mitte geneigte vordere Seite (10d, 11d) (im Sinne der Drehbewegung) verfügt,
dadurch gekennzeichnet:
- daß die Ablauf-Blattschaufeln (10, 11) jeweils einen Abstreifrand (10e, 11e, 10f) für die Teilchen des thermoplastischen Materials aufweisen, der mindestens zum Teil in einem vorbestimmten Abstand von der inneren Oberfläche (12, 1) dieser gegenüber angeordnet ist;
- daß der Behälter eine untere Trennwand (12) in radialer Richtung umfaßt, die gegenüber dem Gasstrom des Spülgases durchlässig ist und eine Durchlüftung der behandelten Beladung gewährleistet, wobei diese Trennwand den Behälter in zwei Kammern unterteilt, nämlich in eine obere Haupt- und Behandlungskammer (13) und in eine untere Kammer (14) zur Einleitung des Gasstromes; und
- daß die vordere Seite (10b, 10d, 11b, 11c) von mindestens einer Ablauf-Blattschaufel (10, 11), nämlich von einem radialen Arm (10a, 11a) und/oder von einem vertikalen Arm (10c, 11c) über eine Vielzahl von benachbarten, nebeneinander angeordneten Oberflächenhohlräumen (17) verfügt, um zeitweilig die transportierten Teilchen der Beladung während deren Behandlung zurückzuhalten.

2. Vorrichtung nach Anspruch 1, dadurch gekennzeichnet, daß der untere Abstreifrand (10e, 11e) für die Teilchen des thermoplastischen Materials, der zu einem radialen Ami (10a, 11a) von mindestens einer Ablauf-Blattschaufel (10, 11) gehört, in einem Abstand zwischen 5 und 15 Millimeter von der unteren Trennwand (12) entfernt angeordnet ist.

3. Vorrichtung nach Anspruch 1, dadurch gekennzeichnet, daß der äußere Abstreifrand (10f) für die Teilchen des thermoplastischen Materials, der zu einem vertikalen Arm (10c) von mindestens einer Ablauf-Blattschaufel (10) gehört, in einem Abstand zwischen 5 und 15 Millimeter von der seitlichen Wand (2) des Behälters entfernt angeordnet ist.

4. Vorrichtung nach Anspruch 1, dadurch gekennzeichnet, daß die axiale Welle (8) durch die Zuführungskammer (14) des Gasstroms von einer Seite zur anderen Seite hindurch angeordnet ist.

5. Vorrichtung nach Anspruch 1, dadurch gekennzeichnet, daß die axiale Welle (8) des Rührers (6) durch einen externen Motor betätigt wird, der auf einem Träger angeordnet ist, und im Innern der oberen Kammer (13) des festen Behälters (1) angeordnet ist.

6. Vorrichtung nach Anspruch 1, dadurch gekennzeichnet, daß die beiden Blattschaufeln (10, 11) für einen aufsteigenden zentripetalen Ablauf in der Art eines einstückigen Rührers ausgestaltet sind und im wesentlichen in derselben Ebene des Durchmessers enthalten sind, wobei die radialen Arme (10a, 11a) der beiden Blattschaufeln im wesentlichen fluchtend ausgerichtet sind.

7. Vorrichtung nach Anspruch 6, dadurch gekennzeichnet, daß der Rührer (10, 11) in Bezug auf die mitführende axiale Welle (8) lösbar ist.

8. Vorrichtung nach Anspruch 1, dadurch gekennzeichnet, daß der Behälter einen geneigten Boden (15) in Bezug auf die untere Trennwand (14) und eine seidiche Klappe (16) als Zugang zur Zuführungskammer (14) des Gasstroms aufweist, die im unteren Bereich des geneigten Bodens angeordnet ist.

9. Vorrichtung nach Anspruch 1, dadurch gekennzeichnet, daß der vertikale Arm (10c) einer ersten Blattschaufel (10) eine im wesentlichen solche Höhe aufweist, die zwei Dritteln der Höhe der Behandlungskammer (13) entspricht, und daß der vertikale Arm (11c) einer zweiten Blattschaufel (11) eine im wesentlichen solche Höhe aufweist, die zwei Dritteln der Höhe des vertikalen Armes (10c) der ersten Blattschaufel (10) entspricht.

10. Vorrichtung nach Anspruch 1, dadurch gekennzeichnet, daß der radiale Arm (11a) einer Blattschaufel (11) eine Länge aufweist, die zwei Dritteln des Radius des Behälters (1) entspricht.

11. Vorrichtung nach einem der Ansprüche 1 bis 10, dadurch gekennzeichnet, daß die vordere Seite eine zellige Oberfläche des Bienenwaben-Typs aufweist.

## Claims

1. Device for treating a thermoplastic particulate material with an agitating fas, comprising :
A) a stationary container (1) for receiving a charge of a material, whose side wall (2) has a shape of revolution relative to an axis (7), equipped with a means (3) for introducing the charge to be treated, a means (4) for discharging the treated charge, and a means (5, 56) for circulating an agitating gas through the container.
B) a rotor (6) for agitating the charge, movable in rotation relative to the container and around the said axis, arranged essentially inside the said container, comprising:
- an axial shaft (8) provided with a means (9) for driving in rotation;
- at least two blades (10, 11) for upward centripetal flow, each blade comprising, on the one hand, a radial arm (10a, 11a) extending radially and horizontally from the said shaft in the lower part of the container, provided with a front face (10b, 11b) (depending on the direction of rotation) sloping forward and, on the other hand, a vertical upright (10c, 11c) extending vertically inside the container, provided with a front face (10d, 11d) (depending on the direction of rotation) which is oblique toward the center,
**characterized** in that:
- each of the flow blades (10, 11) has an edge (10e, 11e, 10f) for picking up the particles of the thermoplastic material, situated at least partly at a certain distance from the opposing internal surface (12, 1);
- the container comprises a lower partition (12) extending radially and permeable to the purging gas stream, ensuring ventilation of the treated charge, the said partition dividing the container into two compartments, namely a main, upper treatment compartment (13), and a lower compartment (14) for introducing the gas stream;
- the front face (10b, 10d, 11b, 11c) of at least one flow blade (10, 11), namely of the radial arm (10a, 11a) and/or of the vertical upright (10c, 11c) comprises a plurality of surface cavities (17) adjoining one another, for temporary retention of the conveyed particles of the charge while the latter is being treated.

2. Device according to Claim 1, characterized in that the lower edge (10e, 11e) for picking up the particles of the thermoplastic material, belonging to the radial arm (10a, 11a) of at least one flow blade (10, 11) is situated at a distance of between 5 and 15 mm from the lower partition (12).

3. Device according to Claim 1, characterized in that the lower edge (10f) for picking up the particles of the thermoplastic material, belonging to the vertical upright (10c) of at least one flow blade (10) is situated at a distance of between 5 and 15 mm from the side wall (2) of the container.

4. Device according to Claim 1, characterized in that the axial shaft (8) passes right through the compartment (14) for introducing the gas stream.

5. Device according to Claim 1, characterized in that the axial shaft (8) of the agitating rotor (6) is driven by an external motor system installed on a gib and is situated inside the upper compartment (13) of the stationary container (1).

6. Device according to Claim 1, characterized in that the two blades (10, 11) for upward centripetal flow are constructed in the fashion of a single-unit agitator and are included substantially within the same diametral plane, the radial arms (10a, 11a) of the two blades respectively being substantially aligned.

7. Device according to Claim 6, characterized in that the agitator (10, 11) is removable in relation to the axial driving shaft (8).

8. Device according to Claim 1, characterized in that the container comprises a bottom (15) sloping relative to the lower partition (14) and a side trap door (16) for access to the compartment (14) for introducing the gas straw, situated in the low part of the sloping bottom.

9. Device according to Claim 1, characterized in that the vertical upright (10c) of a first blade (10) has a height substantially equal to two thirds of the height of the treatment compartment (13) and the vertical upright (11c) of a second blade (11) has a height substantially equal to two thirds of the height of the vertical upright (10c) of the first blade (10).

10. Device according to Claim 1, characterized in that the radial arm (11a) of one blade (11) has a length substantially equal to two thirds of the radius of the container (1).

11. Device according to one of Claims 1 to 10, characterized in that the front face has a cellular surface of the honeycomb type.
